# EUROPEAN PATENT SPECIFICATION

(11) **EP 4 596 393 B1**
(45) Date of publication and mention of the grant of the patent: **19.08.2026**
(21) Application number: 24383081.7
(22) Date of filing: 07.10.2024
(51) Int. Cl.: B64C 1/06

(54) **FITTING STRUCTURE FOR AIRCRAFT FUSELAGE**
BEFESTIGUNGSSTRUKTUR FÜR FLUGZEUGRUMPF
STRUCTURE DE FIXATION POUR FUSELAGE D'AÉRONEF

(43) Date of publication of application: 06.08.2025
(73) Proprietor: Airbus Operations, S.L.U., 28906 Getafe, Madrid (ES)
(72) Inventor: BALLESTERO MENDEZ, Jorge, 28906 Getafe (ES); FERNANDEZ RAMIREZ, Ana, 28906 Getafe (ES); COMENAREJO MATELLANO, Nuria, 28906 Getafe (ES); CLEMENTE ESCOBAR, Eva, 28906 Getafe (ES); CERNADA MORALES, Daniel, 28906 Getafe (ES)
(74) Representative: Elzaburu S.L.P.

(56) References cited:
- EP-B1- 2 164 754
- US-A1- 2011 001 010

## Description

### Technical field

The present invention is directed to a fitting structure for aircraft fuselage, specially indicated for providing a robust and safe joint between two aircraft fuselage sections while permitting to disassemble the two aircraft fuselage sections for providing access to the interior of the aircraft fuselage to preferably install and uninstall the LH2 tanks. Alternatively this solution could be applied in other cases when regular access may be required.

The fitting structure for aircraft fuselage, object of the present invention, provides an access to otherwise inaccessible parts in the interior of the aircraft fuselage, in case maintenance or repair operations are needed.

This invention is preferably applicable in the field of designing, manufacturing, operation and maintenance of aircraft fuselage components, in particular in H2-powered aircrafts..

### Background of the invention

In the context of hydrogen powered (H2-powered) aircraft development, large tanks of fuel need to be accommodated in the fuselage. Access to these tanks for operations of maintenance, removal and substitution need to be provided.

In the process of designing and manufacturing the structural elements of an aircraft fuselage, orbital joints are usually envisaged for producing the permanent joint of two different sections of the fuselage. This new solution is envisaged to be applicable to both the case of permanent or removable joints between fuselage sections.

Orbital joints are carried out along the perimeter of the section of the elements to be joined. The structural assembly of the elements thus joined is carried out using fasteners such as rivets for permanent solutions, this operation taking the name of sewing orbital. In order to ensure the mechanical continuity of the structure thus assembled, the elements must be in intimate contact at the junction. This implies that the two elements are manufactured with precision so that at the junction interface the shapes of the two elements are identical or perfectly complementary depending on whether the junction is made end to end or by interlocking.

Conventional orbital joints used to attach different aircraft fuselage sections to one another are usually heavy and complex mechanisms in cargo aircraft, and do not normally allow access to two different fuel tanks, respectively positioned in front and rear aircraft fuselage sections.

Document EP 2 164 754 B1 is known from the prior art. This document discloses a coupling method for coupling a first and a second stiffening profile element for an outer skin of an aircraft or spacecraft.

### Summary of the invention

With the aim of providing a solution to the abovementioned problems, the present invention refers to a fitting structure for aircraft fuselage.

The fitting structure for aircraft fuselage, according to the present invention, is configured to attach a first aircraft fuselage section (e.g. a forward aircraft fuselage element) to a second aircraft fuselage section (e.g. a rear aircraft fuselage element) along complementary circumferential edges of both aircraft fuselage sections.

The fitting structure for aircraft fuselage comprises:
- a butt-strap, wherein the butt-strap is configured to be attached to the inner side of an aircraft fuselage skin, wherein the butt-strap comprises an annular geometry, wherein the butt-strap is configured to protrude (or project) beyond a first circumferential edge of the first aircraft fuselage section towards the second aircraft fuselage section;
- a connecting frame comprising an annular geometry and configured to be attached to a fuselage skin of the first aircraft fuselage section with the intermediation of the butt-strap, in proximity to a first circumferential edge of the first aircraft fuselage section, and;
- a plurality of stabilizers, wherein each stabilizer comprises a main body with two flaps, wherein each stabilizer is configured to connect the fuselage skin and the butt-strap with the connecting frame, wherein the stabilizers are configured to be arranged in correspondence with end portions (run-out portions) of stringers of the aircraft fuselage, wherein the main body comprises a first side provided with a first lateral flap and a second side provided with a second lateral flap; wherein each stabilizer is configured to be attached to the connecting frame in correspondence with the first lateral flap, and; wherein each stabilizer is configured to be attached to the butt-strap, in correspondence with the second lateral flap. The stabilizers may be preinstalled in the connecting frame. In this case, in order to allow the assembly/disassembly operations, the but-strap may first be installed on the "fixed fuselage side" and then the stabilizers may be installed on the connecting frame web through the first lateral flap.

By means of the fitting structure described above, an efficient/feasible-to-mount structure is provided, wherein the two aircraft fuselage sections can be attached to one another by attaching each stabilizer to the fuselage skin of the second aircraft fuselage section. The attachment/detachment operation can be accomplished by means of either discrete blind fasteners, discrete bolts and anchor nuts pre-installed at the butt-strap and/or stabilizers.

Furthermore, by means of the fitting structure described above, an efficient attachment of both aircraft fuselage sections is achieved.

The stabilizers enhance the transfer of loads to the connecting frame's web, coming from the moments produced by the stringers run-outs.

According to the present invention, the fitting structure for aircraft fuselage comprises a plurality of coupling shovels, wherein the connecting frame is configured to be attached to stringers of the first aircraft fuselage section by means of the coupling shovels, such that each coupling shovel is configured to be attached to the connecting frame (preferably to the foot of the connecting frame) and to a corresponding stringer.

The fitting structure for aircraft fuselage, according to the present invention, may comprise a plurality of shimming pieces (or shim parts), wherein each coupling shovel is configured to be attached to the corresponding stringer with the intermediation of a shimming piece. These shim parts are aimed to guarantee the same thickness on both sides connected with the shovel. They are usually made of PPS (Polyphenylene Sulphide resin) where a wide range of thicknesses can be chosen. They can also be protected with glass fibre in one or both faces.

According to a preferred embodiment of the fitting structure, object of the present invention, the butt-strap comprises a projecting edge comprising a plurality of grooves (or trimmings or trimmed butt-strap edge zones), wherein each groove is configured to be positioned in correspondence with the end portion (run-out portion) of a stringer of the second aircraft fuselage section. According to this embodiment, the end portion of each stringer is preferably introduced into a groove of the butt-strap.

These trimmed butt-strap edge zones facilitate the prevention of one cross-section with only the "fuselage skin thickness" transferring the loads between fuselage sections. By providing these trimmed edge zones, a good fastening between skin/butt strap or skin/stringer at the removal joint zone is ensured.

According to a preferred embodiment, the fitting structure comprises one stabilizer at each side of each groove of the butt-strap. In other words, two stabilizers are configured to be disposed at each side of the end of a stringer of the second aircraft fuselage section.

According to a possible embodiment of the fitting structure, the main body of each stabilizer comprises a triangular wedge shape. In this way, the triangular wedge-shaped main body of the stabilizer is positioned in a plane perpendicular to the connecting frame web (the connecting frame middle section).

The first lateral flap and the second flap of each stabilizer may be respectively bent 90 º with respect to the main body. For the second lateral flap, this angle allows to adapt to the aircraft fuselage in the cylindrical sections of the aircraft fuselage. Alternatively, the angle could be different in order to adapt to conical sections of the aircraft fuselage.

According to a preferred embodiment of the fitting structure for aircraft fuselage, object of the present invention, the connecting frame comprises a "C-shaped" cross-section geometry, wherein the convex side of the connecting frame (the connecting frame web's outer side) is configured to be oriented towards the second aircraft fuselage section. However, according to alternative embodiments, the connecting frame may comprise a different cross-section geometry, such as a "J-shape" cross-section geometry or a "T-shape" cross-section geometry.

Preferably, the attachment of each stabilizer in correspondence with its second lateral flap is accessible from the outer side of the aircraft fuselage skin.

This feature allows for more feasibly performing the assembly and disassembly operations of both aircraft fuselage sections or sections.

By means of the fitting structure described above, the attachment between the fuselage skin of both aircraft fuselage sections, in the fixed side (in the first aircraft fuselage section) and in the detachable side (in the second aircraft fuselage section), is done through one single contact surface.

Furthermore, by means of the fitting structure for aircraft fuselage described above, a removable solution is enabled, either with an extended repair solution approach or a more classic removable solution with bolts and anchor nuts preinstalled in the detachable side. Alternatively, this concept can be also considered as a permanent solution offering the previously mentioned advantages with regards to other conventional solutions.

According to a preferred embodiment of the invention, the connecting frame is made up of one single piece or component at each transversal section thereof.

The present invention further refers to an aircraft comprising a fitting structure for aircraft fuselage as described above.

Furthermore, the aircraft of the present invention comprises stringers of the aircraft fuselage sections which may comprise, for example, a "Z-shaped" cross section geometry, a "J-shaped" cross section geometry, a "T-shaped" cross section geometry or a "Ω-shaped" cross section geometry.

### Brief description of the drawings

As a means for better understanding at least one embodiment of the present invention, the following set of drawings is introduced by way of schematic illustration and in a non-limitative manner.
Figure 1: Shows a schematic view of a first (forward) aircraft fuselage element and a second (rear) aircraft fuselage element to be attached by means of a possible embodiment of the fitting structure for aircraft fuselage according to the present invention.
Figure 2: Shows a schematic partial perspective view from the inner side of both aircraft fuselage sections, wherein a schematic view of a possible embodiment of the fitting structure for aircraft fuselage according to the present invention is depicted.
Figure 3: Shows a schematic plan view of the fitting structure for aircraft fuselage of Figure 2.
Figure 4: Shows a schematic cross section view of the fitting structure for aircraft fuselage of Figure 2.
Figure 5: Shows a schematic perspective view from the inner side of both aircraft fuselage sections, wherein the second aircraft fuselage section is disassembled from the first aircraft fuselage section.

### Detailed description

The present invention, as already introduced, refers to a fitting structure for aircraft fuselage.

The fitting structure for aircraft fuselage, object of the present invention, allows for a safe attachment of two aircraft fuselage sections (201, 202), in a secure and safe manner, while reducing the number of connecting elements necessary for performing the attachment of the two aircraft fuselage sections (201, 202).

The fitting structure for aircraft fuselage, object of the present invention, further allows for an efficient/feasible-to-release attachment of two aircraft fuselage sections (201, 202), thereby allowing a separation of the two aircraft fuselage sections (201, 202) when access is needed for maintenance or inspection purposes, such as when there is a need for access to the hydrogen deposits inside one or more aircraft fuselage sections (201, 202).

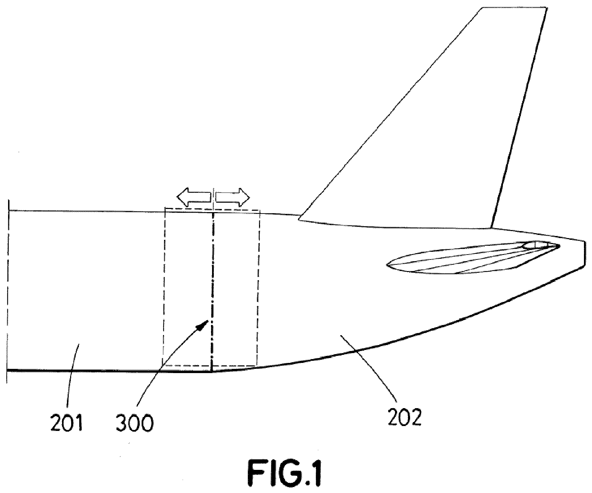

Figure 1 schematically depicts the rear part of the fuselage of an aircraft, with two aircraft fuselage sections (201, 202) attached to one another at an orbital joint (300), the orbital joint (300) being marked in Figure 1 as a discontinuous line.

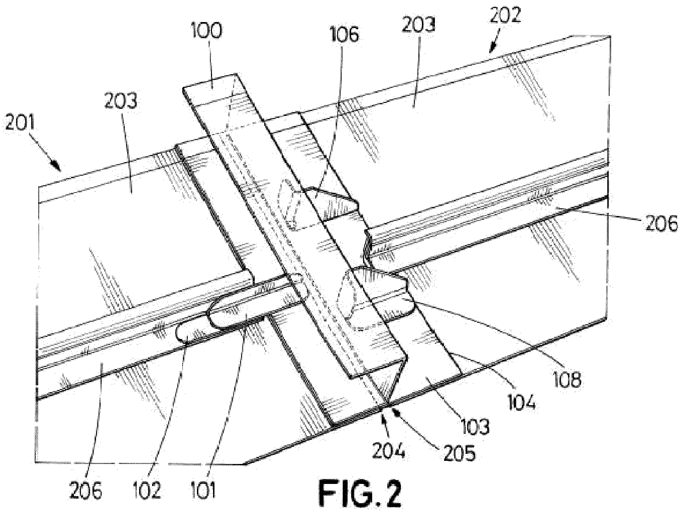

Figure 2 shows the inner side of the fuselage skin (203) of the two aircraft fuselage sections (201, 202) attached to one another at respective circumferential edges (204, 205) by means of a possible embodiment of the fitting structure of the present invention.

As schematically depicted in Figure 2, the fitting structure for aircraft fuselage comprises a continuous connecting frame (100) having an annular or ring geometry and being configured to be attached to the first aircraft fuselage section (201) in proximity to a first circumferential edge (204) of the first aircraft fuselage section (201).

As shown in Figure 2, the connecting frame (100) is configured to be arranged in the interior side of the fuselage skin (203), between the end of the stringers (206) and the first circumferential edge (204) of the first aircraft fuselage section (201).

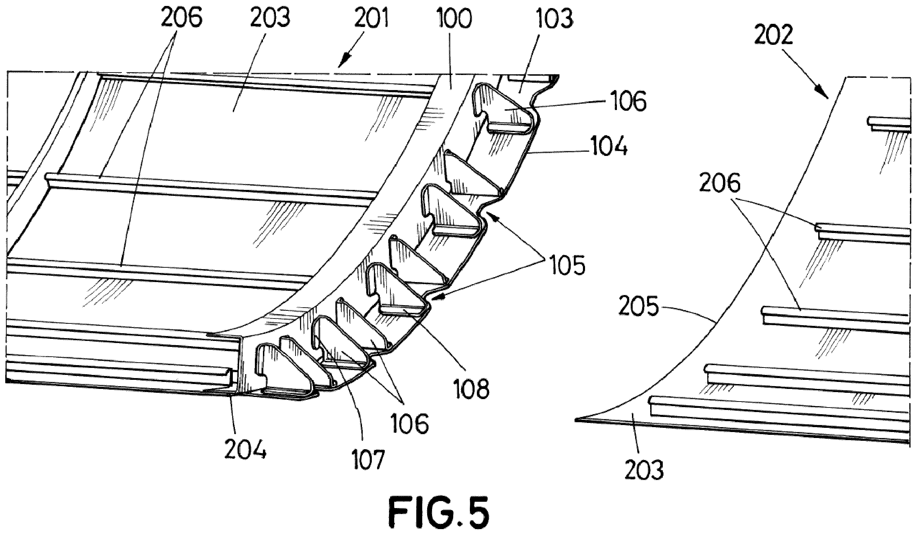

The connecting frame (100) may comprise (as clearly shown in Figure 2 and Figure 5) a "C-shaped" cross section geometry, comprising a head part, a foot part and a middle web part, with its concave side (the concave face of the web part) facing the inner side of the first aircraft fuselage section (201). However, although not shown in the figures, the connecting frame (100) may comprise a different cross-section geometry, such as a "J-shaped" cross-section geometry.

The connecting frame (100) runs along and in correspondence with the first circumferential edge (204) and is attached to the stringers (206) of the first aircraft fuselage section (201) by means of coupling shovels (101) which are both attached to the connecting frame (100) (to the foot of the connecting frame) and to each stringer (206).

The connecting frame (100) can be made in one single piece along its whole length (circumferential length) or in several parts (for example, in 4 parts) along its whole length (circumferential length).

The connecting frame (100) is preferably a continuous frame (made in one single part) at each cross-section (transversal section) of the connecting frame (100).

Each coupling shovel (101) can be attached to the corresponding stringer (206) with the intermediation of a shimming piece (102). This may serve to offset the different possible thickness values at the stringer/frame feet.

The attachment of each coupling shovel (101) to the connecting frame (100) (to the foot of the connecting frame (100)) may further serve as an attachment of the connecting frame (100) to the fuselage skin (203) of the first aircraft fuselage section (201).

Moreover, the connecting frame (100) is attached to the fuselage skin (203) of the first aircraft fuselage section (201) with the intermediation of a butt-strap (103).

The butt-strap (103) comprises an annular or ring geometry and is configured to project beyond the first circumferential edge (204) of the first aircraft fuselage section (201) and beyond the connecting frame (100) towards the second aircraft fuselage section (202).

The butt-strap (103) comprises a projecting edge (104) with a plurality of grooves (105) or trimmings, wherein each groove (105) or trimming is configured to be positioned in correspondence with the end of a stringer (206) (to the stringer run-out) of the second aircraft fuselage section (202).

Moreover, the fitting structure of the present invention comprises a plurality of stabilizers (106).

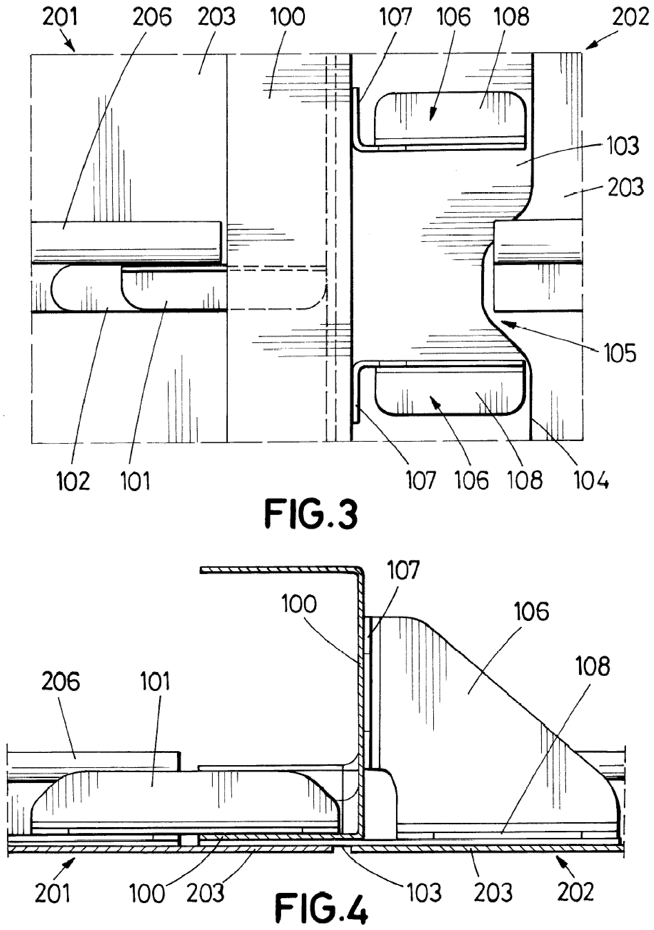

As schematically shown in Figure 4 and Figure 5, each stabilizer (106) comprises a main body comprising approximately a triangular shape (a triangular wedge shape), with a first side of the main body of the stabilizer (106) being provided with a first lateral flap (107) (or first lateral flange) (bent with respect to the main body, approximately forming 90º with respect to the main body of the stabilizer (106)), and with a second side of the main body of the stabilizer (106) being provided with a second lateral flap (108) (or second lateral flange) (bent with respect to the main body, approximately forming 90º with respect to the main body of the stabilizer (106)). One of the lateral flanges is connected at 90º with the main body (stabilizer web), and to the fuselage skin. In this case, the flange preferably comprises a curved surface, with a "hinge line" with reference to the stabilizer web, to match the butt-strap curved geometry.

Each stabilizer (106) is configured to be attached to the connecting frame (100) (to the convex side of the "C-shape" geometry of the connecting frame (100)) in correspondence with the first lateral flap (107).

Furthermore, as schematically shown in Figure 3 and Figure 4, each stabilizer (106) is configured to be attached to the fuselage skin (203) of the second aircraft fuselage section (202), with the intermediation of the butt-strap (103), in correspondence with the second lateral flap (108).

The attachment of each stabilizer (106) in correspondence with its second lateral flap (108) is preferably accessible from the outer side of the aircraft fuselage skin (203), such that through appropriate assemble or disassemble means to operate corresponding nuts and/or bolts, the attachment of the stabilizers (106) to the aircraft fuselage skin (203) can be released, thereby allowing (as schematically depicted in Figure 5) for the separation manoeuvre of the second aircraft fuselage section (202) with respect to the first aircraft fuselage section (201).

The stabilizers (106) are configured to be disposed at each side of each groove (105) (at each side of each trim) of the butt-strap (103), such that when the fitting structure is in use (attaching the aircraft fuselage sections (201, 202) to one another), the stabilizers (106) are disposed at each side of the stringers (206) of the second aircraft fuselage section (202).

When the fitting structure is in use (attaching the aircraft fuselage sections (201, 202) to one another), a second circumferential edge (205) of the second aircraft fuselage section (202) is positioned in close proximity to the first circumferential edge (204) of the first aircraft fuselage section (201).

## Claims

1. Fitting structure for aircraft fuselage configured to attach a first aircraft fuselage section (201) to a second aircraft fuselage section (202) along complementary circumferential edges (204, 205) of both aircraft fuselage sections (201, 202), wherein the fitting structure for aircraft fuselage comprises:
- a butt-strap (103), wherein the butt-strap (103) is configured to be attached to the inner side of an aircraft fuselage skin (203), wherein the butt-strap (103) comprises an annular geometry, wherein the butt-strap (103) is configured to protrude beyond a first circumferential edge (204) of the first aircraft fuselage element (201) towards the second aircraft fuselage section (202);
- a connecting frame (100) comprising an annular geometry and configured to be attached to the fuselage skin (203) of the first aircraft fuselage section (201) with the intermediation of the butt-strap (103), in proximity to the first circumferential edge (204) of the first aircraft fuselage section (201);
- a plurality of stabilizers (106), wherein each stabilizer (106) comprises a main body with two flaps (107, 108), wherein each stabilizer is configured to connect the fuselage skin (203) and the butt-strap (103) with the connecting frame (100), wherein the stabilizers (106) are configured to be arranged at end portions of stringers (206) of the aircraft fuselage, wherein the main body comprises a first side provided with a first lateral flap (107) and a second side provided with a second lateral flap (108); wherein the first lateral flap (107) of each stabilizer (106) is configured to be attached to the connecting frame (100), and; wherein the second lateral flap (108) of each stabilizer (106) is configured to be attached to the butt-strap (103), and; (103); and
**characterised in that** the fitting structure comprises
- a plurality of coupling shovels (101), wherein each coupling shovel (101) is configured to be attached to the connecting frame (100) and to a corresponding stringer (206).

2. Fitting structure for aircraft fuselage according to claim 1, **characterized in that** it comprises a plurality of shimming pieces (102), wherein each coupling shovel (101) is configured to be attached to the corresponding stringer (206) with the intermediation of a shimming piece (102).

3. Fitting structure for aircraft fuselage according to any preceding, **characterized in that** the butt-strap (103) comprises a projecting edge (104) comprising a plurality of grooves (105), wherein each groove (105) is configured to be positioned at the end portion of a stringer (206) of the second aircraft fuselage section (202).

4. Fitting structure for aircraft fuselage according to claim 3, **characterized in that** it comprises one stabilizer (106) on each side of each groove (105) of the butt-strap (103).

5. Fitting structure for aircraft fuselage according to any preceding claim, **characterized in that** the main body of each stabilizer (106) comprises a triangular wedge shape.

6. Fitting structure for aircraft fuselage according to any preceding claim, **characterized in that** the first lateral flap (107) and the second flap (108) of each stabilizer (106) are respectively bent 90 º with respect to the main body.

7. Fitting structure for aircraft fuselage according to any preceding claim, **characterized in that** the connecting frame (100) comprises a "C-shaped" cross-section geometry, wherein the convex side of the connecting frame (100) is configured to be oriented towards the second aircraft fuselage section (202).

8. Fitting structure for aircraft fuselage according to any preceding claim, **characterized in that** the connecting frame (100), at each transversal section thereof, is made up of one single piece.

9. Aircraft **characterized in that** it comprises a fitting structure for aircraft fuselage according to any preceding claim.

10. Aircraft according to claim 9, **characterized in that** the stringers (206) of the aircraft fuselage sections (201, 202) comprise a "Z-shaped" cross section geometry.

11. Aircraft according to claim 9, **characterized in that** the stringers (206) of the aircraft fuselage sections (201, 202) comprise a "J-shaped" cross section geometry.

12. Aircraft according to claim 9, **characterized in that** the stringers (206) of the aircraft fuselage sections (201, 202) comprise a "T-shaped" cross section geometry.

13. Aircraft according to claim 9, **characterized in that** the stringers (206) of the aircraft fuselage sections (201, 202) comprise a "Ω-shaped" cross section geometry.

## Patentansprüche

1. Befestigungsstruktur für einen Flugzeugrumpf, die so konfiguriert ist, dass sie einen ersten Flugzeugrumpfabschnitt (201) an einem zweiten Flugzeugrumpfabschnitt (202) entlang komplementärer Umlaufkanten (204, 205) beider Flugzeugrumpfabschnitte (201, 202) befestigt, wobei die Befestigungsstruktur für den Flugzeugrumpf umfasst:
- eine Stoßlasche (103), wobei die Stoßlasche (103) so konfiguriert ist, dass sie an der Innenseite einer Flugzeugrumpfhaut (203) befestigt wird, wobei die Stoßlasche (103) eine ringförmige Geometrie umfasst, wobei die Stoßlasche (103) so konfiguriert ist, dass sie über eine erste Umlaufkante (204) des ersten Flugzeugrumpfelements (201) in Richtung des zweiten Flugzeugrumpfabschnitts (202) vorsteht;
- einen Verbindungsrahmen (100), der eine ringförmige Geometrie umfasst und so konfiguriert ist, dass er an der Rumpfhaut (203) des ersten Flugzeugrumpfabschnitts (201) unter Zwischenschaltung der Stoßlasche (103) in der Nähe der ersten Umlaufkante (204) des ersten Flugzeugrumpfabschnitts (201) befestigt wird;
- eine Vielzahl von Stabilisatoren (106), wobei jeder Stabilisator (106) einen Hauptkörper mit zwei Klappen (107, 108) umfasst, wobei jeder Stabilisator so konfiguriert ist, dass er die Rumpfhaut (203) und die Stoßlasche (103) mit dem Verbindungsrahmen (100) verbindet, wobei die Stabilisatoren (106) so konfiguriert sind, dass sie an Endabschnitten von Stringer (206) des Flugzeugrumpfes angeordnet sind, wobei der Hauptkörper eine erste Seite, die mit einer ersten seitlichen Klappe (107) versehen ist, und eine zweite Seite, die mit einer zweiten seitlichen Klappe (108) versehen ist, umfasst; wobei die erste seitliche Klappe (107) jedes Stabilisators (106) so konfiguriert ist, dass sie an dem Verbindungsrahmen (100) befestigt werden kann, und; wobei die zweite seitliche Klappe (108) jedes Stabilisators (106) so konfiguriert ist, dass sie an der Stoßlasche (103) befestigt werden kann, und; (103); und **dadurch gekennzeichnet, dass** die Befestigungsstruktur umfasst
- eine Vielzahl von Verbindungsschaufeln (101), wobei jede Verbindungsschaufel (101) so konfiguriert ist, dass sie an dem Verbindungsrahmen (100) und an einem entsprechenden Stringer (206) befestigt wird.

2. Befestigungsstruktur für einen Flugzeugrumpf nach Anspruch 1, **dadurch gekennzeichnet, dass** sie eine Vielzahl von Ausgleichsteilen (102) umfasst, wobei jede Verbindungsschaufel (101) so konfiguriert ist, dass sie unter Zwischenschaltung eines Ausgleichsteils (102) an dem entsprechenden Stringer (206) befestigt wird.

3. Befestigungsstruktur für einen Flugzeugrumpf nach einem der vorstehenden Ansprüche, **dadurch gekennzeichnet, dass** der Stoßriemen (103) eine vorstehende Kante (104) umfasst, die eine Vielzahl von Nuten (105) umfasst, wobei jede Nut (105) so konfiguriert ist, dass sie an dem Endabschnitt eines Stringers (206) des zweiten Flugzeugrumpfabschnitts (202) positioniert ist.

4. Befestigungsstruktur für einen Flugzeugrumpf nach Anspruch 3, **dadurch gekennzeichnet, dass** sie einen Stabilisator (106) auf jeder Seite jeder Nut (105) der Stoßlasche (103) umfasst.

5. Befestigungsstruktur für einen Flugzeugrumpf nach einem der vorstehenden Ansprüche, **dadurch gekennzeichnet, dass** der Hauptkörper jedes Stabilisators (106) eine dreieckige Keilform umfasst.

6. Befestigungsstruktur für einen Flugzeugrumpf nach einem der vorstehenden Ansprüche, **dadurch gekennzeichnet, dass** die erste seitliche Klappe (107) und die zweite Klappe (108) jedes Stabilisators (106) jeweils um 90° in Bezug auf den Hauptkörper gebogen sind.

7. Befestigungsstruktur für einen Flugzeugrumpf nach einem der vorstehenden Ansprüche, **dadurch gekennzeichnet, dass** der Verbindungsrahmen (100) eine "C-förmige" Querschnittsgeometrie umfasst, wobei die konvexe Seite des Verbindungsrahmens (100) so konfiguriert ist, dass sie auf den zweiten Flugzeugrumpfabschnitt (202) ausgerichtet ist.

8. Befestigungsstruktur für einen Flugzeugrumpf nach einem der vorstehenden Ansprüche, **dadurch gekennzeichnet, dass** der Verbindungsrahmen (100) an jedem Querabschnitt davon aus einem einzigen Stück besteht.

9. Flugzeug, **dadurch gekennzeichnet, dass** es eine Befestigungsstruktur für einen Flugzeugrumpf nach einem der vorstehenden Ansprüche umfasst.

10. Flugzeug nach Anspruch 9, **dadurch gekennzeichnet, dass** die Stringer (206) der Flugzeugrumpfabschnitte (201, 202) eine "Z-förmige" Querschnittsgeometrie umfassen.

11. Flugzeug nach Anspruch 9, **dadurch gekennzeichnet, dass** die Stringer (206) der Flugzeugrumpfabschnitte (201, 202) eine "J-förmige" Querschnittsgeometrie umfassen.

12. Flugzeug nach Anspruch 9, **dadurch gekennzeichnet, dass** die Stringer (206) der Flugzeugrumpfabschnitte (201, 202) eine "T-förmige" Querschnittsgeometrie umfassen.

13. Flugzeug nach Anspruch 9, **dadurch gekennzeichnet, dass** die Stringer (206) der Flugzeugrumpfabschnitte (201, 202) eine "Ω-förmige" Querschnittsgeometrie umfassen.

## Revendications

1. Structure de fixation pour fuselage d'aéronef configurée pour fixer une première section de fuselage d'aéronef (201) à une seconde section de fuselage d'aéronef (202) le long de bords circonférentiels complémentaires (204, 205) des deux sections de fuselage d'aéronef (201, 202), dans laquelle la structure de fixation pour fuselage d'aéronef comprend :
- une sangle de butée (103), dans laquelle la sangle de butée (103) est configurée pour être fixée au côté intérieur d'une peau de fuselage d'aéronef (203), la sangle de butée (103) comprend une géométrie annulaire, la sangle de butée (103) est configurée pour faire saillie au-delà d'un premier bord circonférentiel (204) du premier élément de fuselage d'aéronef (201) vers la seconde section de fuselage d'aéronef (202) ;
- un cadre de connexion (100) comprenant une géométrie annulaire et configuré pour être fixé à la peau de fuselage (203) de la première section de fuselage d'aéronef (201) avec l'intermédiaire de la sangle de butée (103), à proximité du premier bord circonférentiel (204) de la première section de fuselage d'aéronef (201) ;
- une pluralité de stabilisateurs (106), dans laquelle chaque stabilisateur (106) comprends un corps principal avec deux volets (107, 108), chaque stabilisateur est configuré pour relier la peau de fuselage (203) et la sangle de butée (103) au cadre de connexion (100), les stabilisateurs (106) sont configurés pour être agencés au niveau de parties d'extrémité de longerons (206) du fuselage d'aéronef, le corps principal comprends un premier côté muni d'un premier volet latéral (107) et un second côté muni d'un second volet latéral (108) ; le premier volet latéral (107) de chaque stabilisateur (106) est configuré pour être fixé au cadre de connexion (100) ; le second volet latéral (108) de chaque stabilisateur (106) est configuré pour être fixé à la sangle de butée (103) ; et (103) ; et **caractérisée en ce que** la structure de fixation comprend
- une pluralité de pelles d'accouplement (101), dans laquelle chaque pelle d'accouplement (101) est configurée pour être fixée au cadre de connexion (100) et à un longeron correspondant (206).

2. Structure de fixation pour fuselage d'aéronef selon la revendication 1, **caractérisée en ce qu'**elle comprend une pluralité de pièces de calage (102), dans laquelle chaque pelle d'accouplement (101) est configurée pour être fixée au longeron correspondant (206) avec l'intermédiaire d'une pièce de calage (102).

3. Structure de fixation pour fuselage d'aéronef selon l'une quelconque des revendications précédentes, **caractérisée en ce que** la sangle de butée (103) comprend un bord saillant (104) comprenant une pluralité de rainures (105), dans laquelle chaque rainure (105) est configurée pour être positionnée au niveau de la partie d'extrémité d'un longeron (206) de la seconde section de fuselage d'aéronef (202).

4. Structure de fixation pour fuselage d'aéronef selon la revendication 3, **caractérisée en ce qu'**elle comprend un stabilisateur (106) de chaque côté de chaque rainure (105) de la sangle de butée (103).

5. Structure de fixation pour fuselage d'aéronef selon l'une quelconque des revendications précédentes, **caractérisée en ce que** le corps principal de chaque stabilisateur (106) comprend une forme de coin triangulaire.

6. Structure de fixation pour fuselage d'aéronef selon l'une quelconque des revendications précédentes, **caractérisée en ce que** le premier volet latéral (107) et le second volet (108) de chaque stabilisateur (106) sont respectivement pliés à 90° par rapport au corps principal.

7. Structure de fixation pour fuselage d'aéronef selon l'une quelconque des revendications précédentes, **caractérisée en ce que** le cadre de connexion (100) comprend une géométrie de section transversale en « C », dans laquelle le côté convexe du cadre de connexion (100) est configuré pour être orienté vers la seconde section de fuselage d'aéronef (202).

8. Structure de fixation pour fuselage d'aéronef selon l'une quelconque des revendications précédentes, **caractérisée en ce que** le cadre de liaison (100), au niveau de chaque section transversale de celui-ci, est constitué d'une seule pièce.

9. Aéronef **caractérisé en ce qu'**il comprend une structure de fixation pour fuselage d'aéronef selon l'une quelconque des revendications précédentes.

10. Aéronef selon la revendication 9, **caractérisé en ce que** les longerons (206) des sections de fuselage d'aéronef (201, 202) comprennent une géométrie de section transversale en « Z ».

11. Aéronef selon la revendication 9, **caractérisé en ce que** les longerons (206) des sections de fuselage d'aéronef (201, 202) comprennent une géométrie de section transversale en « J ».

12. Aéronef selon la revendication 9, **caractérisé en ce que** les longerons (206) des sections de fuselage d'aéronef (201, 202) comprennent une géométrie de section transversale en « T ».

13. Aéronef selon la revendication 9, **caractérisé en ce que** les longerons (206) des sections de fuselage d'aéronef (201, 202) comprennent une géométrie de section transversale en « Q ».
